# EUROPEAN PATENT SPECIFICATION

(11) **EP 2 569 205 B1**
(45) Date of publication and mention of the grant of the patent: **23.04.2014**
(21) Application number: 11725803.8
(22) Date of filing: 10.05.2011
(51) Int. Cl.: B62D 5/04, B62D 7/08

(54) **STEERING UNIT FOR VEHICLE WHEELS**
LENKEINHEIT FÜR FAHRZEUGRÄDER
MODULE DE BRAQUAGE POUR ROUES DE VÉHICULE

(30) Priority: 12.05.2010 IT MO20100143
(43) Date of publication of application: 20.03.2013
(73) Proprietor: Borghi, Ivan, 41030 Bomporto (MO) Frazione Villavara (IT)
(72) Inventor: Borghi, Ivan, 41030 Bomporto (MO) Frazione Villavara (IT)
(74) Representative: Brunacci, Marco
(86) International application number: PCT/IB2011/000988
(87) International publication number: WO 2011/141794

(56) References cited:
- EP-A2- 1 386 825
- EP-A2- 1 775 196
- EP-A2- 2 006 187
- WO-A1-2005/009826
- WO-A2-01/26950
- US-A- 4 694 925
- US-A- 4 718 686

## Description

### Technical Field

The present invention relates to a steering unit for vehicle wheels.

### Background Art

Steering units for vehicle wheels are known from EP 1775196, and from EP 2006187, filed under the name of the same applicant.

More particularly, EP 1775196 describes a steering unit having a hub which supports in rotation each wheel or group of wheels of a vehicle steering around the same rotation axis.

The steering unit described by EP 1775196 also has a support element associated with the hub and connectable to a vehicle.

The support element is mobile in rotation around a vertical axis, so as to put in rotation also the corresponding hub, and is kinematically connected to an electric motor through a reduction unit.

As anticipated above, each wheel or group of wheels is supported by a relative hub so, as shown in figures 2 and 3 of EP 1755196, the vehicles with two steering wheels or groups of steering wheels have two electric motors, i.e. one by each steering wheel or group of steering wheels around the same axis.

Since the steering wheels or groups of steering wheels of a vehicle have to be synchronised together, the steering units described by EP 1755196 have to be provided with an electric differential, of the type known to the expert of the field. This electric differential is therefore suitable for connecting the electric motors of the steering wheels or of the groups of steering wheels together around different rotation axes.

The use of these steering units therefore can cause problems in case of vehicles having at least two steering wheels or groups of steering wheels due to the use of such electric differentials.

In actual fact, the steering units of known type which use an electric differential are complicated from a construction point of view and also rather expensive.

The increase in production costs, and therefore in the retail prices, is due not only to the presence of an electric differential, but also to the need to use an electric motor for each steering wheel or group of steering wheels.

In actual facts, electric motors, generally characterised by high rotation speeds, require the presence of precise reduction units so as to allow controlling correctly the wheel steering angle.

EP 2006187 describes instead a steering unit wherein the steering wheels, associated with relative support elements (spindles) mobile in rotation around respective axes, are mechanically connected together.

More particularly, the steering wheels are mechanically connected together through the stem of a double-acting hydraulic cylinder, the movement of which is controlled by a relative hydraulic circuit.

The translation of the stem, controlled by the steering-wheel rotation of the relative vehicle operatively connected to the above mentioned hydraulic circuit, causes therefore the support elements of the wheels to rotate around the relative axes.

Also EP 2006187 has therefore some drawbacks.

In actual facts, the steering unit described by EP 2006187 is not very precise and has longer response times than those of an electric motor, which affect the response time of the relative vehicle.

Furthermore, the steering unit described by EP 2006187 is very complicated from a construction point of view, also given the presence of the hydraulic circuit which supplies the double-acting cylinder, with the consequent increase in production costs.

In the following treatise EP 1755196 has been taken as the closer background art to the invention here described, since it illustrates the use of an electric motor for the steering of wheels. WO 01/26950 discloses the preamble of claim 1.

### Description of the Invention

The main aim of the present invention is to provide a steering unit for vehicle wheels that is easier to manufacture than the steering units of known type. Another object of the present invention is to provide a steering unit that has lower manufacturing costs than the steering units of known type.

Another object of the present invention is to provide a steering unit for vehicle wheels that allows overcoming the mentioned drawbacks of the background art within the ambit of a simple, rational, easy to use and low cost solution.

The above mentioned objects are achieved by the present steering unit for vehicle wheels, as defined in claim 1.

### Brief Description of the Drawings

Other characteristics and advantages of the present invention will become more evident from the description of a preferred, but not exclusive, embodiment of a steering unit for vehicle wheels, illustrated by way of example, but not limited to them, in the annexed drawings in which:
figure 1 is an axonometric view of the steering unit according to the invention;
figure 2 is a longitudinal section view of the steering unit of figure 1;
figure 3 is a transversal section view of the steering unit of figure 1;

### Embodiments of the Invention

With particular reference to such figures, by 1 is globally indicated a steering unit for vehicle wheels.

The steering unit 1 comprises at least an axle 2 connectable to a vehicle, the latter not being shown for simplicity of illustration, at least a pair of support elements 3 associated in rotation with the axle 2 and associable with respective wheels R, and at least an electric motor 4 suitable for controlling the rotation of the support elements 3 around the corresponding vertical rotation axes, identified in the illustrations with reference numbers 5.

More particularly, the support elements 3, also called spindles, are hinged at the opposite extremities of the axle 2 and are supported in rotation by the latter around the respective axes 5.

Each support element 3 is therefore suitable for allowing the rotation of the respective wheel R around the corresponding axis 5.

According to the invention, the steering unit 1 comprises a steering device 6 for steering the wheels R configured so as to mechanically connect the support elements 3 together and operatively connected to the electric motor 4.

The support elements 3 are therefore operatively connected to the electric motor 4 by means of the steering device 6.

Advantageously, the steering device 6 comprises at least a steering element 7 connected to the support elements 3 and movable to rotate the support elements themselves around the respective axes 5. The opposite extremities of the steering element 7 are connected to the support elements 3 by means of respective connecting rods 8, which are therefore hinged to the steering element 7 on one side and to the relative support element 3 on the opposite side.

The steering element 7 is then kinematically connected to the electric motor 4.

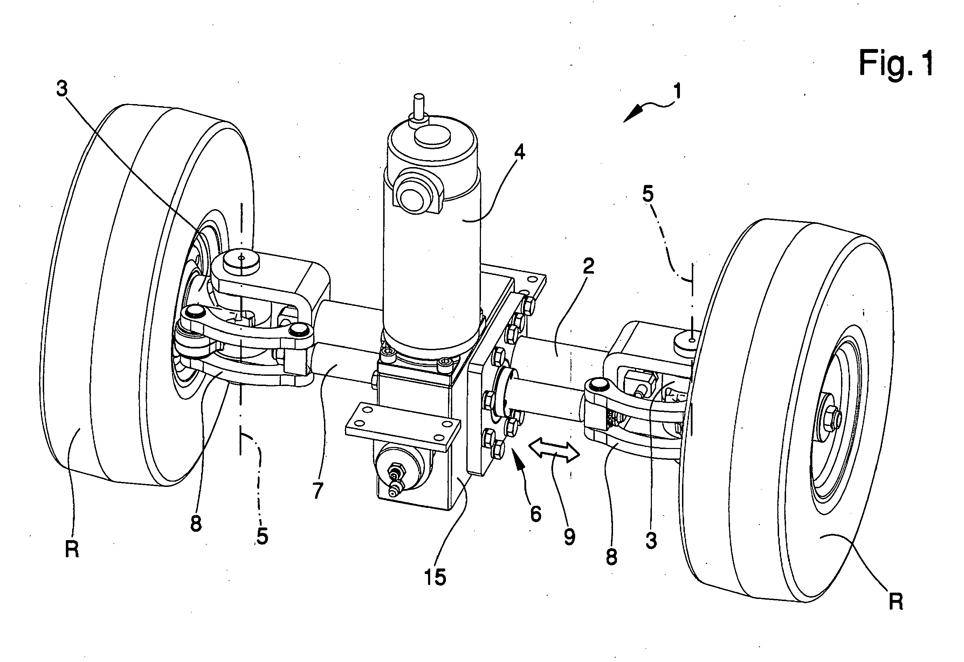

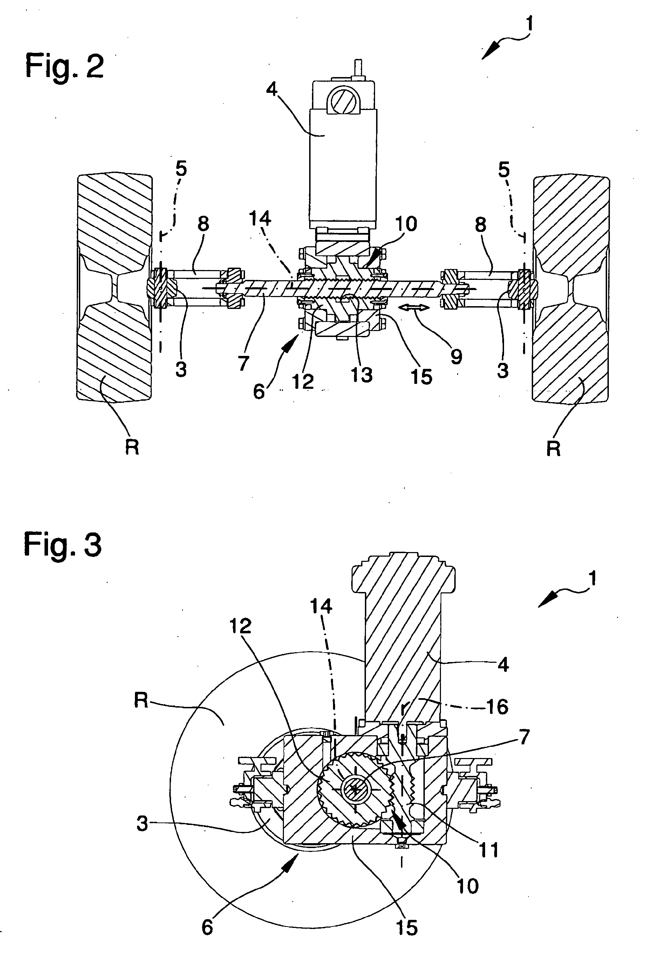

More particularly, the steering element 7 is mobile in translation along an adjustment direction, identified in figures 1 and 2 with reference number 9. The adjustment direction 9 substantially corresponds to the direction of longitudinal extension of the steering element 7.

Obviously, the steering element 7 is mobile along both directions identified by the adjustment direction 9 to allow for the rotation of the support elements 3 around the corresponding axes 5 in both rotation directions.

Advantageously, the steering device 6 comprises transfer means 10 for transferring the motion from the electric motor 4 to the steering element 7.

Suitably, the electric motor 4, which can be of the direct current type (DC) or alternate current type (AC), comprises at least an output shaft 11, mobile in rotation around an axis 16 and the transfer means 10 are suitable for transforming the rotatory motion of the shaft 11 into the translatory motion of the steering element 7. The shaft 11 is mobile in both rotation directions around the axis 16. The direction of the axis 16 can vary according to the shape of the vehicle on which the unit 1 is fitted and can be, e.g., horizontal or vertical. Preferably, the transfer means 10 are configured so as to define a screw-nut screw coupling with the steering element 7.

More in detail, the steering element 7 has an external threading and the transfer means 10 comprise at least a nut screw 12 fitted on the steering element itself and suitable for cooperating with its external threading. The nut screw 12 is therefore made up of a tubular body open at its extremities and having a threading defined on its internal surface.

The nut screw 12 is entirely crossed by the steering element 7, which therefore protrudes from both its extremities.

The steering element 7 is therefore the screw of the screw-nut screw coupling and the nut screw 12, mobile in rotation around an axis 14, is kinematically connected to the electric motor 4.

Advantageously, the screw-nut screw coupling defined by the steering element 7 and by the nut screw 12 is of the ball-bearing type.

As shown in figure 3, both the steering element 7 and the nut screw 12 have a substantially circular section. More particularly, the steering element 7 has a narrowing in correspondence to its extremities for the connection to the connecting rods 8, while the nut screw 12 has a groove 13 defined in correspondence to its central area for housing the balls suitable for transforming the rolling friction into sliding friction, the latter balls not being shown in detail in the illustrations.

The rotation axis of the nut screw 12, identified in figure 2 with reference number 14, corresponds to the longitudinal axis of the steering element 7.

The nut screw 12 can turn around the axis of rotation 14 in both directions. Obviously, through the effect of the rotation of the nut screw 12, the steering element 7 is moved in translation along the adjustment direction 9. The steering element 7 is therefore locked in rotation.

Therefore, the rotation of the nut screw 12 in a first direction corresponds to the translation of the steering element 7 along a first direction of the adjustment direction 9 and the rotation of the nut screw 12 in a second direction, contrary to the above mentioned first direction, corresponds to the translation of the steering element 7 along a second direction of the adjustment direction 9 substantially opposite the first direction.

As anticipated above, the nut screw 12 is kinematically associated with the electric motor 4 and, more particularly, to its output shaft 11.

The rotation axis 14 of the nut screw 12 is substantially at right angles to the rotation axis 16 of the shaft 11.

Preferably, the kinematic coupling between the output shaft 11 of the electric motor 4 and the nut screw 12 is of the worm screw - crown gear type. In this case, therefore, the worm screw corresponds to the shaft 11 and the crown gear to the nut screw 12.

More particularly, the shaft 11 has a threading suitable for engaging with a corresponding toothing defined on the outer surface of the nut screw 12.

The nut screw 12 engages therefore internally with the steering element 7 and externally with the shaft 11.

In brief, the steering device 6 comprises a nut screw 12, having externally a crown gear suitable for cooperating with the shaft 11, through which it is brought in rotation around the relative axis 14, and a steering element 7, having an external threading suitable for cooperating with a corresponding internal threading defined on the nut screw 12, the rotation of which makes the steering element 7 move in translation along the adjustment direction 9. Advantageously, the steering unit 1 comprises a boxed casing 15 for the protection of at least the transfer means 10.

In the preferred embodiment shown in the illustrations, the boxed casing 15 is configured so as to cover at least the kinematic coupling of the nut screw 12 with both the steering element 7 and the shaft 11, so as to prevent any residue or external element from entering the areas of reciprocal engagement thus causing the fault of the mechanism thus made.

Suitably, the electric motor 4 comprises at least a reduction gear, not visible in detail in the illustrations, suitable for reducing the rotation speed of the shaft 11 to avoid the sudden rotation of the wheels R.

The electric motor 4 is operatively connected to the steering-wheel of the vehicle by means of sensors of known type connected to an electronic unit, in such a way that the rotation of the steering-wheel itself causes a corresponding rotation of the shaft 11, with entity and direction proportional to the rotation angle of the steering-wheel.

The operation of the present invention is as follows.

The rotation of the vehicle steering-wheel made by an operator is processed in a corresponding electric signal which is then sent to the electric motor 4.

The electric motor 4 is therefore activated by such electric signal and, as a consequence, it starts the relevant output shaft 11 in rotation.

The rotation of the shaft 11 causes, through the effect of the reciprocal coupling, the rotation of the nut screw 12 around the relevant axis 14.

The rotation direction of the shaft 11, which is in turn related to the steering-wheel rotation direction, affects the rotation direction of the nut screw 12.

The rotation of the nut screw 12 involves, through the effect of the engagement of the respective threading and of the balls placed in between them, the translation of the steering element 7 along the adjustment direction 9.

More particularly, the engagement of the internal threading of the nut screw 12 with the external threading of the steering element 7 and the balls housed in the groove 13 allow transforming the rotatory motion of the nut screw 12 into the translatory motion of the steering element 7.

In this case as well, as anticipated above, the translation direction of the steering element 7 is related to the rotation direction of the nut screw 12.

The steering element 7 can therefore be moved in the two directions defined by the adjustment direction 9 depending on the rotation direction of the steering-wheel.

The movement of the steering element 7 is then transferred to the support elements 3 associated with the opposite extremities of the axle 2 by means of the connecting rods 8 placed in between them.

More in detail, the translation of the steering element 7 causes the rotation of the connecting rods 8 and therefore of the support elements 3 associated with each of these connecting rods 8.

The support elements 3, and therefore also the corresponding wheels R associated with them, are therefore connected in rotation around the relative axes 5 by means of the steering element 7.

It has in point of fact been ascertained how the described invention achieves the proposed objects and in particular the fact is underlined that the steering elements are mechanically connected together and their movement is controlled by means of an electric motor.

This particular manufacturing solution allows exploiting surprisingly the synergy due to the combination of the electric motor and the mechanical connection of the steering wheels, thus obtaining a precise and quick regulation of the steering job.

Moreover, the steering unit according to the invention is less expensive from the construction point of view with respect to the known units described in the introduction because it allows using only one electric motor, regardless of the fact that the vehicle has one or more steering wheels around different rotation axes, and it allows connecting mechanically the wheels together by means of a solution which is easy to implement and of effective operation.

## Claims

1. Steering unit (1) for vehicle wheels, comprising:
- at least an axle (2) connectable to a vehicle;
- at least a pair of support elements (3) for wheels (R) hinged at the opposite extremities of the axle (2) and supported in rotation by the latter around respective axes (5), each support element (3) being suitable for allowing the rotation of the wheels (R) around the corresponding axes (5);
- a single electric motor (4) suitable for controlling the rotation of said support elements (3) around the respective axes (5) and comprising at least an output shaft (11) mobile in rotation around an axis (16);
- a steering device (6) for the wheels (R) mechanically connecting said support elements (3) together and operatively connected to said electric motor (4);
the steering unit (1) further comprising:
- at least a steering element (7) connected to said support elements (3) and mobile in translation along an adjustment direction (9) so as to rotate the support elements themselves around the respective axes (5); and
- transfer means (10) for transferring the motion from said electric motor (4) to said steering element (7), suitable for transforming the rotatory motion of said output shaft (11) into the translatory motion of said steering element (7);
the steering unit (1) being **characterized by** the fact that said transfer means (10) define a screw-nut screw coupling with said steering element (7); wherein said steering element (7) has an external threading and said transfer means (10) comprise at least a nut screw (12) fitted on said steering element (7) and suitable for cooperating with its external threading, the nut screw (12) being mobile in rotation around another axis (14) and being kinematically connected to the output shaft (11) of said electric motor (4) by means of a kinematic coupling of the worm screw - crown gear type; wherein said output shaft (11) has a threading suitable for engaging with a corresponding toothing defined on the outer surface of said nut screw (12).

2. Unit (1) according to claim 1, **characterised by** the fact that the coupling between said steering element (7) and said nut screw (12) is of the ball-bearing type.

3. Unit (1) according to claim 1 or 2, **characterised by** the fact that said nut screw (12) is mobile in rotation in both directions around to the axis of rotation (14), the rotation of said nut screw (12) in a first direction corresponding to the translation of said steering element (7) along a first direction of said adjustment direction (9) and the rotation of said nut screw (12) in a second direction, contrary to said first direction, corresponding to the translation of said steering element (7) along a second direction of said adjustment direction (9) substantially opposite said first direction.

4. Unit (1) according to one or more of the preceding claims, **characterised by** the fact that the rotation axis of said output shaft (11) is substantially at right angles to the rotation axis (14) of said nut screw (12).

5. Unit (1) according to one or more of the preceding claims, **characterised by** the fact that the opposite extremities of said steering element (7) are connected to said support elements by means of respective connecting rods (8).

6. Unit (1) according to one or more of the preceding claims, **characterised by** the fact that said electric motor (4) comprises at least a reduction gear.

7. Unit (1) according to one or more of the preceding claims, **characterised by** the fact that said electric motor (4) is arranged horizontally or vertically.

## Patentansprüche

1. Lenkeinheit (1) für Fahrzeugräder, mit:
- wenigstens einer mit einem Fahrzeug verbindbaren Achse (2);
- wenigstens einem Paar Trägerelementen (3) für Räder (R), die an den entgegengesetzten Enden der Achse (2) angelenkt und bei Drehung letzterer um jeweilige Achsen (5) abgestützt sind, wobei jedes Trägerelement (3) die Drehung der Räder (R) um die korrespondierenden Achsen (5) ermöglichen kann;
- einem einzelnen Elektromotor (4), der die Drehung der Trägerelemente (3) um die jeweiligen Achsen (5) steuern kann und wenigstens eine Abtriebswelle (11) umfasst, die drehbeweglich um eine Achse (16) ist;
- einer Lenkeinrichtung (6) für die Räder (R), die die Trägerelemente (3) mechanisch miteinander verbindet und mit dem Elektromotor (4) operativ verbunden ist;
wobei die Lenkeinheit (1) ferner umfasst:
- wenigstens ein Lenkelement (7), das mit den Trägerelementen (3) verbunden ist und entlang einer Einstellrichtung (9) translatorisch beweglich ist, um so die Trägerelemente selbst um die jeweiligen Achsen (5) zu drehen; und
- Übertragungsmittel (10) zum Übertragen der Bewegung von dem Elektromotor (4) auf das Lenkelement (7), so dass die Drehbewegung der Abtriebswelle (11) in die Translationsbewegung des Lenkelements (7) umgewandelt werden kann;
wobei die Lenkeinheit (1) **dadurch gekennzeichnet ist, dass** die Übertragungsmittel (10) eine Schraubenmutter/Schraube-Kupplung mit dem Lenkelement (7) bilden, wobei das Lenkelement (7) ein Außengewinde hat und das Übertragungsmittel (10) wenigstens eine Mutter-Schraube (12) umfasst, die auf dem Lenkelement (7) sitzt und mit dessen Außengewinde zusammenwirken kann, wobei die Mutter-Schraube (12) drehbeweglich um eine weitere Achse (14) ist und mithilfe einer kinematischen Kupplung des Schneckenschraube/Zahnkranz-Typs mit der Abtriebswelle (11) des Elektromotors (4) verbunden ist, wobei die Abtriebswelle (11) ein Gewinde hat, das in eine korrespondierende Zahnung eingreifen kann, die auf der Außenfläche der Mutter-Schraube (12) ausgebildet ist.

2. Einheit (1) nach Anspruch 1, **dadurch gekennzeichnet, dass** die Kupplung zwischen dem Lenkelement (7) und der Mutter-Schraube (12) von der Bauweise her ein Kugellager ist.

3. Einheit (1) nach Anspruch 1 oder 2, **dadurch gekennzeichnet, dass** die Mutter-Schraube (12) drehbeweglich in beiden Richtungen um die Drehachse (14) ist, wobei die Drehung der Mutter-Schraube (12) in einer ersten Richtung mit der Verschiebung des Lenkelements (7) entlang einer ersten Richtung der Einstellrichtung (9) korrespondiert und die Drehung der Mutter-Schraube (12) in einer zweiten Richtung, entgegen der ersten Richtung, mit der Verschiebung des Lenkelements (7) entlang einer zweiten Richtung der Einstellrichtung (9), im Wesentlichen entgegengesetzt der ersten Richtung, korrespondiert.

4. Einheit (1) nach ein oder mehreren vorhergehenden Ansprüchen, **dadurch gekennzeichnet, dass** die Drehachse der Abtriebswelle (11) im Wesentlichen in rechten Winkeln zu der Drehachse (14) der Mutter-Schraube (12) verläuft.

5. Einheit (1) nach ein oder mehreren der vorhergehenden Ansprüche, **dadurch gekennzeichnet, dass** die entgegengesetzten Enden des Lenkelements (7) mit den Trägerelementen mithilfe jeweiliger Verbindungsstangen (8) verbunden sind.

6. Einheit (1) nach ein oder mehreren der vorhergehenden Ansprüche, **dadurch gekennzeichnet, dass** der Elektromotor (4) wenigstens ein Reduktionsgetriebe umfasst.

7. Einheit (1) nach ein oder mehreren der vorhergehenden Ansprüche, **dadurch gekennzeichnet, dass** der Elektromotor (4) horizontal oder vertikal angeordnet ist.

## Revendications

1. Unité de braquage (1) pour roues de véhicule, comprenant :
- au moins un essieu (2) pouvant être relié à un véhicule ;
- au moins une paire d'éléments de support (3) pour des roues (R) articulées aux extrémités opposées de l'essieu (2) et portées en rotation par ce dernier autour d'axes respectifs (5), chaque élément de support (3) étant apte à permettre la rotation des roues (R) autour des axes correspondants (5) ;
- un moteur électrique unique (4) qui est apte à commander la rotation desdits éléments de support (3) autour des axes respectifs (5) et qui comprend au moins un arbre de sortie (11) mobile en rotation autour d'un axe (16) ;
- un dispositif de braquage (6) pour les roues (R), reliant mécaniquement lesdits éléments de support (3) entre eux et relié de manière fonctionnelle audit moteur électrique (4) ;
l'unité de braquage (1) comprenant en outre :
- au moins un élément de braquage (7) relié auxdits éléments de support (3) et mobile en translation le long d'une direction d'ajustement (9) de manière à faire tourner les éléments de support eux-mêmes autour des axes respectifs (5) ; et
- des moyens de transmission (10) pour transmettre le mouvement dudit moteur électrique (4) audit élément de braquage (7), aptes à transformer le mouvement de rotation dudit arbre de sortie (11) en mouvement de translation dudit élément de braquage (7) ;
l'unité de braquage (1) étant **caractérisée par le fait que** lesdits moyens de transmission (10) définissent un couplage vis-écrou avec ledit élément de braquage (7) ; dans lequel ledit élément de braquage (7) comporte un filetage extérieur et lesdits moyens de transmission (10) comprennent au moins un écrou (12) ajusté sur ledit élément de braquage (7) et apte à coopérer avec son filetage externe, l'écrou (12) étant mobile en rotation autour d'un autre axe (14) et étant relié de manière cinématique à l'arbre de sortie (11) dudit moteur électrique (4) au moyen d'un couplage cinématique du type vis sans fin - engrenage à couronne ; dans lequel ledit arbre de sortie (11) comporte un filetage apte à s'engager avec une denture correspondante définie sur la surface extérieure dudit écrou (12).

2. Unité (1) selon la revendication 1, **caractérisée par le fait que** le couplage entre ledit élément de braquage (7) et ledit écrou (12) est du type roulement à billes.

3. Unité (1) selon la revendication 1 ou 2, **caractérisée par le fait que** ledit écrou (12) est mobile en rotation dans les deux directions autour de l'axe de rotation (14), la rotation dudit écrou (12) dans une première direction correspondant à la translation dudit élément de braquage (7) le long d'une première direction de ladite direction d'ajustement (9) et la rotation dudit écrou (12) dans une deuxième direction, opposée à ladite première direction, correspondant à la translation dudit élément de braquage (7) le long d'une deuxième direction de ladite direction d'ajustement (9) pratiquement opposée à ladite première direction.

4. Unité (1) selon une ou plusieurs des revendications précédentes, **caractérisée par le fait que** l'axe de rotation dudit arbre de sortie (11) est sensiblement à angle droit par rapport à l'axe de rotation (14) dudit écrou (12).

5. Unité (1) selon une ou plusieurs des revendications précédentes, **caractérisée par le fait que** les extrémités opposées dudit élément de braquage (7) sont reliées auxdits éléments de support au moyen de tiges de liaison (8) respectives.

6. Unité (1) selon une ou plusieurs des revendications précédentes, **caractérisée par le fait que** ledit moteur électrique (4) comprend au moins un engrenage réducteur.

7. Unité (1) selon une ou plusieurs des revendications précédentes, **caractérisée par le fait que** ledit moteur électrique (4) est disposé horizontalement ou verticalement.
